**Europäisches Patentamt**

**European Patent Office**

**Office européen des brevets**

(19)

(11) Veröffentlichungsnummer : **0 362 720 B1**

(12)

# EUROPÄISCHE PATENTSCHRIFT

(45) Veröffentlichungstag der Patentschrift :
**27.05.92 Patentblatt 92/22**

(21) Anmeldenummer : **89118123.2**

(22) Anmeldetag : **29.09.89**

(51) Int. Cl.⁵ : **B60J 3/02**

(54) **Sonnenblende für Fahrzeuge.**

(30) Priorität : **04.10.88 DE 3833673**

(43) Veröffentlichungstag der Anmeldung :
**11.04.90 Patentblatt 90/15**

(45) Bekanntmachung des Hinweises auf die
Patenterteilung :
**27.05.92 Patentblatt 92/22**

(84) Benannte Vertragsstaaten :
**DE ES FR GB IT SE**

(56) Entgegenhaltungen :
**DE-A- 3 008 361**
**DE-A- 3 342 897**
**DE-B- 1 259 725**
**FR-A- 2 394 377**

(73) Patentinhaber : **Gebr. Happich GmbH**
**Postfach 10 02 49 Clausenbrücke 1**
**W-5600 Wuppertal 1 (DE)**

(72) Erfinder : **Hilbert, Bernard**
**526, Rue de la Forêt**
**FR-57460 Cappel (FR)**
Erfinder : **Hilt, Gérard**
**16, Rue de la Fontaine**
**FR-57450 Henriville (FR)**

## Beschreibung

Die Erfindung bezieht sich auf Sonnenblende für Fahrzeuge mit einem als Polsterkörper ausgebildeten, in einer aus zwei durch Hochfrequenzschweißen randseitig umlaufend miteinander verschweißten Folienzuschnitten gebildeten Umhüllung eingebetteten und durch eine eingelagerte Verstärkungseinlage ausgesteiften Sonnenblendenkörper, der einen von der Verstärkungseinlage gebildeten und von den Folienzuschnitten umkleideten Drehlagerzapfen aufweist.

Eine Sonnenblende der gattungsgemäßen Art ist in der DE-B-12 59 725 gezeigt und beschrieben. Bei dieser bekannten Sonnenblende ist vorgesehen, daß der Drehlagerzapfen von einem freiliegenden, von der Hüllfolie umkleideten Abschnitt des inneren Trägers gebildet ist. Der Drehlagerzapfenabschnitt des Trägers ist im Bereich des umkleideten Abschnitts verstärkt ausgebildet, und zwar durch eine von der Hüllfolie umkleidete Hülse, die seitwärts vorstehende Flügel zum Verschweißen mit der aus zwei in der Blendenlängsmittelebene randverschweißten Kunststoffolien gebildeten Hülle aufweist. Zur Festlegung der Kunststoffolien am Drehlagerzapfen ist somit stets eine zum Festschweißen der Kunststoffolien dienende Hülse erforderlich, die aus hochfrequenzschweißfähigem Kunststoffmaterial bestehen muß und daher von Hause aus recht teuer ist, was insbesondere dann ins Gewicht fällt, wenn der gesamte innere Träger mit Drehlagerzapfen aus Kunststoff bestehen soll, was in der DE-B-12 59 725 auch vorgeschlagen wird. Besteht der innere Träger nach der DE-B-12 59 725 hingegen aus einem Drahtrahmen, so ist es erforderlich, diesen im Bereich der darauf anzuordnenden Hülse durch Kordelung aufzurauhen, hierauf eine separat herzustellende Hülse zu montieren und an dieser die Folienzuschnitte anzuschweißen. Es sind also dann mehrere Arbeitsschritte erforderlich, was die Herstellung erschwert und verzögert und die Sonnenblende verteuert. Aus der DE-B-12 59 725 ergibt sich ferner, daß die an der Hülse angeformten Flügel in der Trennfuge beider Folienlagen der Hülle und damit in der Ebene der Schweißelektroden liegen. Damit ist aber keineswegs eine saubere Schweißnaht oder ein sauberer Randabschluß sichergestellt.

Mit Rücksicht darauf, daß der Drehlagerzapfen einer Fahrzeugsonnenblende ein hochbeanspruchtes Bauelement ist, insbesondere deshalb, weil dieser nicht nur beim Auf- und Abklappen der Sonnenblende eine Drehlagerfunktion übernimmt, sondern weil er beim Verschwenken der Sonnenblende von der Frontscheibe zu einer Seitenscheibe jeweils durch die hinterschnitten ausgebildete Lageraufnahme des Gegenlagers gezwängt und dabie hohe Klemmkräfte aufnehmen muß, sind schon verschiedene Vorschläge bekanntgeworden, den Drehlagerzapfen so anzuordnen und zu gestalten, daß er bei möglichst kostengünstiger Herstellbarkeit nicht leicht beschädigt werden kann.

So ist in der DE-A-28 51 485 ein Verfahren zur Herstellung einer Sonnenblende beschrieben, wobei ein Schaumkern, der an einer seiner Längsseiten mit einer Aussparung und einen diese Aussparung durchsetzenden Steg aus steifem thermoplastischen Material versehen ist, mit zwei weichen thermoplastischen Folien ohne Aussparung umhüllt wird, die entlang des Außenumfangs des Schaumkerns miteinander verbunden werden und um Bereich der Aussparung den Steg lose umgeben. Damit der Klemmsteg mit dem weichen thermoplastischen Material der Kappenelemente in dauerhafter Weise verbunden werden kann, ohne daß sich das weiche thermoplastische Material nach längerem Gebrauch vom Steg löst, ist bei diesem bekannten Verfahren vorgesehen, daß der Steg samt den beiden an ihm anliegenden Abschnitten der Folien zwischen zwei an seine Form angepaßte Sonotroden geklemmt wird, und daß die Folien über den gesamten Stegbereich mit dem Steg mittels Ultraschall verschweißt werden. Es erscheint glaubhaft, daß mit dem aufgezeigten Verfahren eine dauerhafte Verbindung zwischen dem Klemmsteg und dem thermoplastischen Umhüllungmaterial herstellbare ist, jedoch ist hierfür auf jeden Fall, zumindest ein zusätzlicher Arbeitsgang und die Bereitstellung einer zusätzlichen Fertigungsvorrichtung erforderlich, wodurch sich aber die Herstellungskosten der Sonnenblende erhöhen.

In der DE-A-30 08 361 ist eine Sonnenblende für Fahrzeuge beschrieben, die einen mit Folienzuschnitten verkleideten Drehlagerzapfen aufweist. Um die Verkleidung des Drehlagerzapfens gegen Beschädigungen zu schützen, ist eine den Drehlagerzapfen nebst Verkleidung umgreifende Hülse vorgesehen. Auch diese Maßnahme kann nicht befriedigen, weil die Herstellung der Hülse und die notwendige Montage derselben zusätzliche Arbeitsgänge und Kosten verursacht.

Ähnlich liegen die Verhältnisse bei einer weiteren, durch die DE-A-33 42 897 bekanntgewordenen Sonnenblende, bei der vorgesehen ist, den Drehlagerzapfen ganz oder teilweise aus einem unmittelbar auf einen Bereich der Umhüllung aufgespritzten Kunststoffkörper zu bilden.

In den Unterlagen der DE-A-31 34 400 (vgl. auch DE-OS 33 07 008) ist das herstellungstechnische Problem angesprochen, die Befestigung des Drehlagerzapfens im Polsterkörper so zu bewirken, daß dessen Ummantelung mit der folienartigen Hülle von dem Drehlagerzapfen nicht behindert wird, wobei die Umhüllung in der Weise erfolgen soll, daß der Polsterkörper beidseitig jeweils mit einer Folie belegt und die beiden Folien dann entlang des Randes des Sonnenblendenkörpers, dessen Kontur folgend, in einem Arbeitsgang miteinander verschweißt werden.

In der genannten Druckschrift ist weiterhin angegeben, daß das geschilderte Porblem im Stande der Technik auf zweierlei Weise gelöst wird. Die eine Problemlösung sieht vor, den Drehlagerzapfen mit in die folienartige Hülle einzubeziehen, d.h. auch den Drehlager zapfen mit der Folie zu umkleiden, während gemäß der anderen Problemlösung der Drehlagerzapfen erst nach der Fertigstellung der folienartigen Hülle in einem hierfür vorgesehenen Lagerkörper befestigt wird, wobei er durch randseitige Öffnungen in der Folie geführt wird.

Die sich auf die zweite Problemlösung mit freiliegendem Drehlagerzapfen beziehende DE-A-31 34 400 betrifft nun eine Sonnenblende, die sich dadurch auszeichnen soll, daß der von Ende zu Ende gerade Drehlagerzapfen mit seinen Endbereichen durch Öffnungen in der Hülle hindurch jeweils in ein Steckloch in dem einen bzw. anderen Schenkel eines innerhalb der Hülle im Sonnenblendenkörper befestigten, etwa U-förmigen Haltebügels eingesteckt und in dem einen Steckloch gegen Drehen und in dem anderen gegen axiales Verschieben bezüglich des Haltebügels gesichert ist. Bei diesem bekannten Vorschlag ist es erforderlich, in dem Sonnenblendenkörper eine separat herzustellenden und zu montierenden Haltebügel einzulagern, was die Herstellung der Sonnenblende erschwert und erheblich verteuert. Insbesondere ist es aber erforderlich, den Drehlagerzapfen zunächst in das eine axiale Verschiebbarkeit zulassende Steckloch einzuführen und erst nachdem der Drehlagerzapfen in dieses eingeführt worden ist, durch nunmehriges Zurückschieben des Drehlagerzapfens in das andere Steckloch die axiale Sicherung gegebenenfalls unter Ausnutzung eines Schnapp-Effekts, vorzunehmen. Diese Montageart verlangt zumindest ein erhebliches Maß an Fingerfertigkeit und erscheint insgesamt gesehen, äußerst zeit- und arbeitsaufwendig zu sein.

Wie durch den aufgezeigten Stand der Technik erhellt, können Problemlösungen, die darauf abzielen, den Drehlagerzapfen einer Sonnenblende nicht mit in die folenartige Hülle einzubeziehen, schon aus Kostengründen, keine brauchbaren Alternativen darstellen. Die vorliegende Erfindung befaßt sich daher wieder mit einer Sonnenblende, bei der auch der Drehlagerzapfen, wie durch die DE-B-12 59 725 bekannt, mit Folie umkleidet sein soll.

Der vorliegenden Erfindung liegt nun, ausgehend von einer Sonnenblende der eingangs näher erwähnten und durch die DE-B-12 59 725 bekanntgewordenen Art die Aufgabe zugrunde, den Drehlagerzapfen derselben so zu gestalten, daß zwischen diesem und der ihn umgeben den Umhüllung ohne zusätzliche Manipulationen eine verwürgungsfreie, unverdrehbare Verbindung bewirkt wird.

Diese Aufgabe wird erfindungsgemäß dadurch gelöst, daß der Drehlagerzapfen mit zwei diametral gegenüberliegenden, sich axial erstreckenden, ein Auftragen der beim Hochfrequenzschweißen entstehenden Schweißraupen verhindernden Abflachungen oder rinnenförmigen Vertiefungen und weiterhin mit zumindest zwei radial vorstehenden, sich axial erstreckenden, einer Relativbewegung zwischen Umhüllung und Drehlagerzapfen entgegenwirkenden Rippen mit freien, in das Umhüllungsmaterial eindringenden Kanten ausgebildet ist.

Bei der erfindungsgemäßen Ausführungsform liegt zunächst zwischen dem Drehlagerzapfen und dem Umhüllungsmaterial entgegen der Lehre der DE-B-12 59 725 keine Schweißverbindung vor, weshalb der erfindungsgemäße Drehlagerzapfen auch keine, eine relativ große Unrundheit bewirkende Flügel aufweist. Insbesondere kann die Materialauswahl für die Verstärkungseinlage und für den Drehlagerzapfen nun frei getroffen werden, da lediglich Stabilitätsanforderungen nicht hingegen Schweißfähigkeiten zu berücksichtigen sind. Durch die Anordnungen von Abflachungen oder bevorzugt rinnenförmigen Vertiefungen am Drehlagerzapfen, verursachen die rückseitigen Schweißraupen der Umhüllung keine Unrundheiten des Drehlagerzapfens sondern tragen schon dazu bei, die Umhüllung drehfest am Drehlagerzapfen festzulegen. Diese Festlegung der Umhüllung am Drehlagerzapfen wird unterstützt oder besser gesagt vervollkommnet durch die am Drehlagerzapfen angeordneten Rippen, deren freie Kanten in das Umhüllungsmaterial eindringen. Die Rippen brauchen nur eine geringe Höhe von beispielsweise max 0,5 mm aufzuweisen, um den angestrebten Effekt zu bewirken. Aufgrund der geringen Höhe ist auch sichergestellt, daß eine Beschädigung des Umhüllungsmaterials nicht erfolgen kann, weil sie sich mit ihren freien Kanten nur geringfügig in die Rückseite des Umhüllungmaterials eingraben. Die Rippen können im Querschnitt gesehen sägerzahnartig oder annähernd gleichzeitig dreieckig ausgebildet sein. Dabei ist darauf zu achten, daß die freie Rippenkante nicht als scharfer Grat sondern jeweils leicht abgerundet ausgeführt ist. Durch die vorliegende Erfindung ist, wie umfangreiche Versuche gezeigt haben, sichergestellt, daß die den Drehlagerzapfen umgebende Umhüllung beim praktischen Gebrauch der Sonnenblende, bei dem der Gegenlagerzapfen in der Lageraufnahme eines Gegenlagergehäuses eingerastet und hier verschwenkt wird, nicht verwürgt oder eingerissen werden kann. Auch ein Aufplatzen der Schweißnähte konnte nicht beobachtet werden.

Zweckmäßigerweise ist vorgesehen, daß der Drehlagerzapfen aus Gründen einer einfachen, rationellen und kostengünstigen Herstellung einstückig und materialeinheitlich mit der aus einem Kunststoff-Spritzgußteil bestehenden Verstärkungseinlage ausgebildet ist.

Im folgenden wird ein Ausführungsbeispiel der Erfindung anhand der Zeichnung näher erläutert. Es zeigen

Fig. 1 eine Sonnenblende in Ansicht und

Fig. 2 einen vergrößerten Schnitt gemäß der Linie II - II in Fig. 1.

Die Sonnenblende weist einen als Polsterkörper ausgebildeten Sonnenblendenkörper 1 mit angenähert rechteckiger Umrißkontur und plattenförmiger Gestalt auf. Der Sonnenblendenkörper 1 besteht aus einem ggf. mehrteilig ausgeführten Schaumstoffkörper 2, einer darin eingelagerten Verstärkungseinlage 3 und einer Umhüllung 4, die aus zwei Folienzuschnitten gebildet ist.

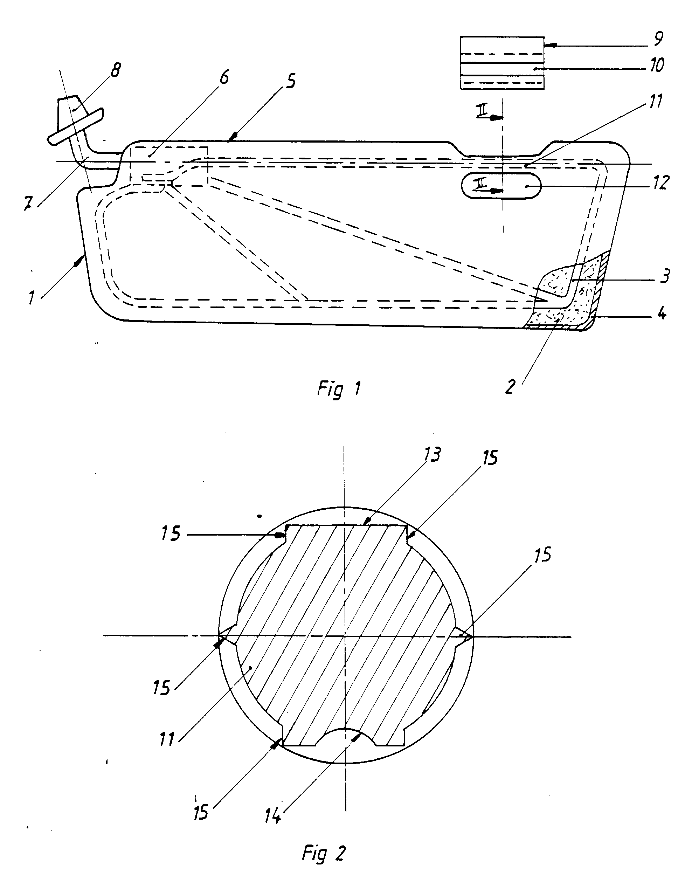

Im Bereich der oberern Längskante 5 weist der Sonnenblendenkörper 1, und zwar zeichnungslinksseitig der Fig. 1, ein eingelagertes, zweckmäßigerweise einstückig mit der bevorzugt als Kunststoff-Spritzgußteil ausgeführten Verstärkungseinlage 3 verbundenes Lagergehäuse 6 auf, in dem ein Schenkel einer etwa L-förmigen Lagerachse 7 gelagert ist, deren anderer Schenkel in einem an einer Fahrzeugkarosserie zu befestigenden Schwenklager 8 sitzt. Zeichnungsrechtsseitig der Fig. 1 ist ebenfalls im Bereich der oberen Längskante 5 ein sogenanntes Gegenlager angeordnet, welches aus einem an der Fahrzeugkarosserie zu befestigenden Gegenlagergehäuse 9 und einem in dessen Lageraufnahme 10 lösbar einrastbaren Drehlagerzapfen 11 besteht. Die Anordnung des Drehlagerzapfens 11 ist so getroffen, daß er mit dem in Lagergehäuse 6 befindlichen Schenkel der Lagerachse 7 fluchtet und mit diesem eine gemeinsame Drehachse bildet.

Der Drehlagerzapfen 11, der eine Ausnehmung 12 des Sonnenblendenkörpers 1 quert, ist Bestandteil des Sonnenblendenkörpers 1 oder genauer gesagt, einstückiger Bestandteil der Verstärkungseinlage 3 und in der aus zwei Folienzuschnitten gebildeten Umhüllung 4 eingebettet.

Bei der Herstellung der Umhüllung 4 des Sonnenblendenkörpers 1 werden insbesondere PVC-Folienzuschnitte als Umhüllungsmaterial verwendet, die durch Hochfrequenzschweißen miteinander verbunden werden. Die Hochfrequenzschweißung von Kunststoffen geht über die dielektrische Erwärmung nichtleitender polarer Stoffe im hochfrequenten elektrischen Feld vor sich. Es handelt sich hierbei um ein sicheres und schnelles Verfahren, das dazu den Vorteil hat, daß Schweißüberstand, sofern mit Trennkanten kombinierte Elektroden verwendet werden, längs eines Restfilms, unmittelbar nach der Schweißung ohne besondere Hilfsmittel abgerissen werden kann, so daß eine saubere und glatte Schweißnaht verbleibt. In der Praxis wird so verfahren, daß ein Folienzuschnitt des Umhüllungsmaterials auf die eine Hauptfläche und der zweite Folienzuschnitt auf die andere Hauptfläche des Sonnenblendenkörpers gelegt wird, wobei jeder Zuschnitt einen umlaufend überstehenden Flansch in der Sonnenblendenkörpermittelebene bildet. Die Flansche werden sodann zwischen zwei einander zugekehrten Stegelektroden eingespannt und durch Hochfrequenzschweissen derart umlaufend miteinander verschweißt, daß durch Materialfluß an den körperzugelegenen Flanschrändern eine einwärts ausgerichtete Schweißraupe gebildet wird. Der Schweißüberstand wird hiernach durch bloßes Abreißen entfernt. Der Sonnenblendenkörper 1 ist hiernach einschließlich des Drehlagerzapfens 11 mit einer aus zwei Folienzuschnitten gebildeten Umhüllung versehen.

Der Drehlagerzapfen 11 ist in Fig. 2 im Querschnitt und ohne Umhüllung 4 versehen in gegenüber Fig. 1 wesentlich vergrößertem Maßstab dargestellt. Der Drehlagerzapfen 11 weist an zwei diametral gegenüberliegenden Seiten entweder jeweils eine Abflachung 13, oder jeweils eine rinnenförmige Verteifung 14 auf. In der Zeichnung ist sowohl eine Abflachung 13 als auch eine rinnenförmige Vertiefung 14 dargestellt. Der Drehlagerzapfen 11 weist weiterhin, über seinen Umfang verteilt, mehrere Rippen 15 auf, die radial aus der Mantelfläche des Drehlagerzapfens 11 vorstehen und freie Kanten besitzen. Sowohl die Abflachungen 13, die rinnenförmigen Verteifungen 14 als auch die Rippen 15 erstrecken sich jeweils über die axiale Länge des Drehlagerzapfens 11. Gegen die Abflachungen 13 oder bevorzugt in den rinnenförmigen Verteifungen 14 vermögen sich die nicht näher dargestellten Schweißraupen abzustützen und in radialer Richtung verschiebegeschützt zu orientieren, so daß schon hierdurch die Umhüllung 4 gehindert wird, sich auf dem Drehlagerzapfen 11 zu drehen. Ein zusätzlicher und sehr effektiver Verdrehschutz wird durch die Rippen 15 erzielt.

## Patentansprüche

1. Sonnenblende für Fahrzeuge mit einem als Polsterkörper ausgebildeten, in einer aus zwei durch Hochfrequenzschweißen randseitig umlaufend miteinander verschweißten Folienzuschnitten gebildeten Umhüllung (4) eingebetteten und durch eine eingelagerte Verstärkungseinlage (3) ausgesteiften Sonnenblendenkörper (1), der einen von der Verstärkungseinlage (3) gebildeten und von den Folienzuschnitten umkleideten Drehlagerzapfen (11) aufweist, dadurch gekennzeichnet, daß der Drehlagerzapfen (11) mit zwei diametral gegenüberliegenden, sich axial erstreckenden ein Auftragen der beim Hochfrequenzschweißen entstehenden Schweißraupen verhindernden Abflachungen (13) oder rinnenförmigen Vertiefungen (14) und weiterhin mit zumindest zwei radial vorstehenden, sich axial erstreckenden, einer Relativbewegung zwischen Umhüllung (4) und Drehlagerzapfen (11) entgegenwirkenden Rippen (15) mit freien, in das Umhüllungsmaterial eindringenden Kanten ausgebildet ist.

2. Sonnenblende nach Anspruch 1, dadurch gekennzeichnet, daß jede Rippe (15) im Querschnitt gesehen, sägezahnartig ausgebildet ist.

3. Sonnenblende nach Anspruch 1 oder 2, dadurch gekennzeichnet, daß der Drehlagerzapfen (11) einstückig und materialeinheitlich mit der aus einem Kunststoff-Spritzgußteil bestehenden Verstärkungseinlage (3) ausgebildet ist.

4. Sonnenblende nach einem oder mehreren der Ansprüche 1 bis 3, dadurch gekennzeichnet, daß der Querschnitt jeder Rippe (15) annähernd gleichseitig dreieckig ausgebildet ist.

## Claims

1. A sun visor for vehicles with a sun visor body (1) which is constructed as a padded body, embedded in a covering (4) formed from two cut pieces of sheeting which are welded to each other around their edges by high frequency welding, and which is reinforced by a reinforcement inlay (3) inserted therein, which sun visor body has a rotary bearing pivot (11) formed by the reinforcement inlay (3) and covered by the cut pieces of sheeting, characterised in that the rotary bearing pivot (11) is constructed with two diametrically opposed, axially extending flattend areas (13) or channel-shaped depressions (14) for the purpose of inhibiting outflow of the weld beads on high frequency welding, and furthermore is constructed with at least two radially projecting, axially extending ribs (15), counteracting a relative movement between the covering (4) and the rotary bearing pivot (11), with free edges penetrating into the covering material.

2. A sun visor according to Claim 1, characterised in that each rib (15), viewed in cross-section, is constructed in the shape of a saw tooth.

3. A sun visor according to Claim 1 or 2, characterised in that the rotary bearing pivot (11) is constructed in one piece and of uniform material with the reinforcement inlay (3), comprising a sprayed die casting of plastics material.

4. A sun visor according to one or more of Claims 1 to 3, characterised in that the cross-section of each rib (15) is constructed approximately in the shape of an equilateral triangle.

## Revendications

1. Pare-soleil pour véhicules comprenant un corps constitué sous forme d'un corps de rembourrage incorporé dans une enveloppe formée par deux sections de feuille soudées l'une à l'autre sur leur périphérie par soudage haute fréquence et rendu rigide par une garniture de renforcement disposée à l'intérieur, qui comprend un tourillon de palier de rotation formé par la garniture de renforcement et recouvert par les sections de feuille, caractérisé en ce que le tourillon de palier de rotation (11) comprend deux à-plats (13) diamétralement opposés, s'étendant axialement et empêchant l'application de chenilles de soudage provenant de la soudure haute fréquence, ou des cavités (14) en forme de rainures, et en outre au moins deux nervures (15) faisant saillie radialement, s'étendant axialement et s'opposant à un mouvement relatif entre l'enveloppe (4) et le tourillon de palier de rotation (11), comprenant des arêtes libres qui s'enfoncent dans le matériau du revêtement.

2. Pare-soleil selon la revendication 1, caractérisé en ce que chaque nervure (15), vue en coupe transversale, a la forme d'une dent de scie.

3. Pare-soleil selon la revendication 1 ou 2, caractérisé en ce que le tourillon de palier de rotation (11) est constitué d'un seul tenant et en le même matériau que la garniture de renforcement (3) qui est constituée en un élément en matière plastique moulé par injection.

4. Pare-soleil selon l'une quelconque ou plusieurs des revendications 1 à 3, caractérisé en ce que la section transversale de chaque nervure (15) a sensiblement la forme d'un triangle équilatéral.

Fig 1

Fig 2